# EUROPEAN PATENT APPLICATION

(11) **EP 4 239 568 A1**
(43) Date of publication of application: **06.09.2023**
(21) Application number: 21885707.6
(22) Date of filing: 08.09.2021
(51) Int. Cl.: G06T 7/00, G06N 20/00

(54) **LEARNING METHOD, LEARNED MODEL, DETECTION SYSTEM, DETECTION METHOD, AND PROGRAM**

(30) Priority: 29.10.2020 JP 2020181626
(71) Applicant: OMRON Corporation, Kyoto 600-8530 (JP)
(72) Inventor: YABUUCHI, Tomohiro, Kyoto-shi, Kyoto 600-8530 (JP)
(74) Representative: HGF
(86) International application number: PCT/JP2021/032942
(87) International publication number: WO 2022/091588

(57) **Abstract**

A learning method comprises original image preparation processing of preparing an original image; learning mask image preparation processing of preparing a mask image in which a mask region covering a specific portion is set from the original image; training data preparation processing of preparing pieces of training data including the mask image as input information and a determination result indicating whether or not the mask image includes a target object region in which a target object is present as ground truth information; and learning processing of executing machine learning on a model using the training data. The learning processing includes causing the model to learn a relationship between non-mask information based on a portion excluding the mask region in the mask image and the determination result, and generating a learned model.

## Description

### TECHNICAL FIELD

The present disclosure relates to a learning method, a learned model, a detection system, a detection method, and a program.

### BACKGROUND ART

Patent Document 1 discloses, in image processing for detecting a target object such as a face, a technique for enhancing the accuracy of determination as to whether the target object is shielded by a shielding object.

### PRIOR ART DOCUMENTS

### PATENT DOCUMENTS

Patent Document 1: Japanese Patent No. 6558387

### SUMMARY OF THE INVENTION

### PROBLEMS TO BE SOLVED BY THE INVENTION

However, the conventional technique disclosed in Patent Document 1 enhances the detection accuracy of the target object in a limited case where the target object and the shielding object are in a predetermined positional relationship. For example, the conventional technique enhances detection accuracy of a face in which the nose and the mouth are shielded by a face mask being a shielding object. The shielding object that can shield the face also includes objects that shield portions other than the nose and the mouth, such as own arms, a part of another person's body, a beard, sunglasses, and the like. However, the conventional technique cannot accurately detect the face in response to such various shielding modes.

An object of the present disclosure is to provide a learning method, a learned model, a detection system, a detection method, and a program which are capable of improving the accuracy of detection of a partially shielded target object.

### MEANS FOR SOLVING THE PROBLEMS

A learning method according to one aspect of the present disclosure includes: original image preparation processing of preparing an original image; learning mask image preparation processing of preparing a mask image in which a mask region covering a specific portion is set from the original image; training data preparation processing of preparing pieces of training data including the mask image as input information and a determination result indicating whether or not the mask image includes a target object region in which a target object is present as ground truth information; and learning processing of executing machine learning on a model using the training data. The learning processing includes causing the model to learn a relationship between non-mask information based on a portion excluding the mask region in the mask image and the determination result, and generating a learned model.

A learned model according to one aspect of the present disclosure learns a relationship between non-mask information based on a portion excluding a mask region in a mask image in which the mask region covering a specific portion is set and a determination result indicating whether or not the mask image includes a target object region in which a target object is present.

A training data generation method according to one aspect of the present disclosure includes: first processing of preparing an original image; second processing of preparing a mask image in which a mask region covering a specific portion is set from the original image; and third processing of generating pieces of training data including the mask image as input information and a determination result indicating whether or not the mask image includes a target object region in which a target object is present as ground truth information.

A detection system according to one aspect of the present disclosure includes: a storage configured to store a learned model; and an arithmetic circuit. The learned model learns a relationship between non-mask information based on a portion excluding a mask region in a mask image in which the mask region covering a specific portion is set and a determination result indicating whether or not the mask image includes a target object region in which a target object is present. The arithmetic circuit executes detection target image acquisition processing of acquiring a detection target image, region of attention setting processing of setting a part or a whole of the detection target image as a region of attention, detection mask image preparation processing of preparing the mask image from the region of attention, determination result acquisition processing of inputting the mask image prepared in the detection mask image preparation processing to the learned model and acquiring the determination result corresponding to the mask image prepared in the detection mask image preparation processing from the learned model, and determination processing of determining whether or not the region of attention includes the target object region based on the determination result acquired in the determination result acquisition processing.

A detection method according to one aspect of the present disclosure is a detection method executed by an arithmetic circuit using a learned model. The learned model learns a relationship between non-mask information based on a portion excluding a mask region in a mask image in which the mask region covering a specific portion is set and a determination result indicating whether or not the mask image includes a target object region in which a target object is present. The detection method includes: detection target image acquisition processing of acquiring a detection target image; region of attention setting processing of setting a part or a whole of the detection target image as a region of attention; detection mask image preparation processing of preparing the mask image from the region of attention; determination result acquisition processing of inputting the mask image prepared in the detection mask image preparation processing to the learned model and acquiring the determination result corresponding to the mask image prepared in the detection mask image preparation processing from the learned model; and determination processing of determining whether or not the region of attention includes the target object region based on the determination result acquired in the determination result acquisition processing.

A program according to one aspect of the present disclosure is a program for causing an arithmetic circuit to execute the above detection method.

### EFFECTS OF THE INVENTION

According to an aspect of the present disclosure, a learning method, a learned model, a detection system, a detection method, and a program which are capable of improving the accuracy of detecting a partially shielded target object are obtained.

### BRIEF DESCRIPTION OF THE DRAWINGS

FIG. 1 is a schematic diagram schematically illustrating an image analysis system being an example of an application scene of a face detection system according to an embodiment of the present disclosure.
FIG. 2 is a block diagram showing an example of a hardware configuration of the face detection system in FIG. 1.
FIG. 3 is a flowchart showing an example of a detection method executed by the arithmetic circuit of the face detection system in FIG. 2.
FIG. 4 is a flowchart showing an example of the face region detection processing shown in FIG. 3.
FIG. 5 is a schematic diagram for illustrating the processing in FIG. 4.
FIG. 6 is a schematic diagram for illustrating the processing S22 to S24 in FIG. 4.
FIG. 7 is a block diagram showing an example of a learning system for generating the learned model shown in FIG. 2.
FIG. 8 is a flowchart showing an example of a learning method.
FIG. 9A is a schematic diagram showing an example of the learning mask image shown in FIG. 7.
FIG. 9B is a schematic diagram showing another example of the learning mask image shown in FIG. 7.
FIG. 10 is a schematic diagram showing an example of a plurality of learning mask images.
FIG. 11 is a schematic diagram illustrating training data to be prepared in the training data preparation processing in FIG. 8.
FIG. 12 is a schematic diagram showing an example of a feature amount of a face.
FIG. 13 is a schematic diagram for illustrating machine learning for a plurality of models.
FIG. 14 is a schematic diagram showing a modification of the learning mask image shown in FIG. 7.
FIG. 15 is a schematic diagram showing another modification of the learning mask image shown in FIG. 7.

### MODES FOR CARRYING OUT THE INVENTION

Hereinafter, embodiments according to the present disclosure will be described with reference to the accompanying drawings. It should be noted that in the following embodiments, the same or similar components are denoted by the same reference numerals.

### 1. Application examples

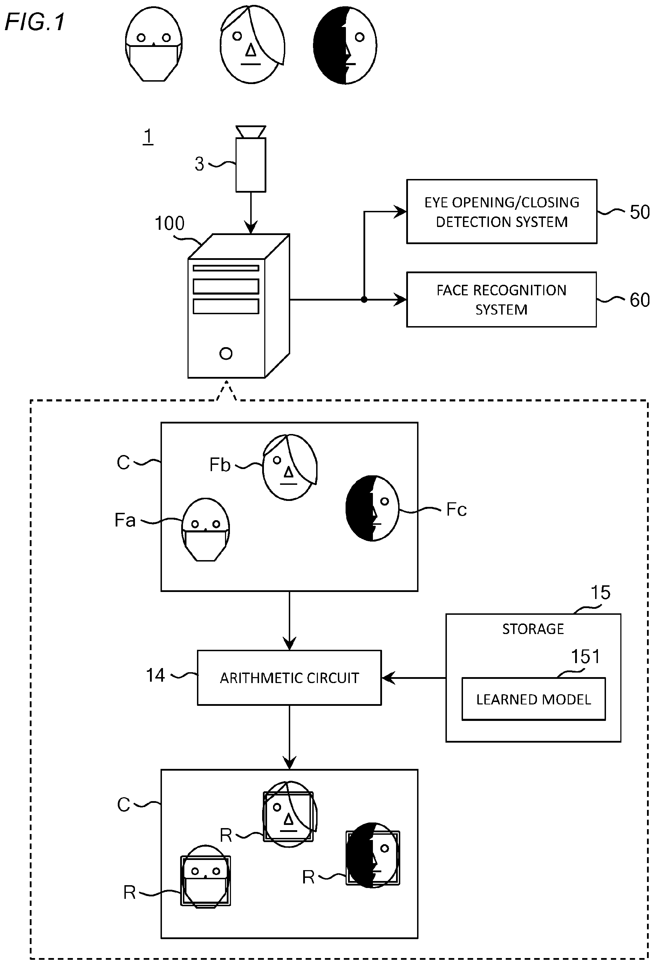

An example of a scene to which the face detection system 100 according to an embodiment is applied will be described with reference to FIG. 1. FIG. 1 schematically illustrates an image analysis system 1 being an example of an application scene of a face detection system 100. The face detection system 100 is an example of a "detection system" of the present disclosure.

The image analysis system 1 includes a face detection system 100. The image analysis system 1 may further include, for example, a camera 3, an eye opening/closing detection system 50, and a face recognition system 60. The camera 3 captures an image of a partially shielded face of a person and forms data on the captured image.

The face detection system 100 is an information processing apparatus that acquires a captured image C captured by the camera 3 and detects a region (hereinafter, referred to as a "face region") R where a person's face is present in the captured image C. The face of a person is an example of the "target object" of the present disclosure, and the face region R is an example of the "target object region" indicating the region where the target object is present in the captured image C. The captured image C is an example of the "detection target image" of the present disclosure.

The detection processing of the face region R is executed by an arithmetic circuit 14 of the face detection system 100. For example, the arithmetic circuit 14 inputs the captured image C to a learned model 151 stored in a storage 15, and causes the learned model 151 to detect the face region R. As described below, the learned model 151 is learned so as to output a determination result indicating whether or not the region of attention includes a face region with respect to an input of a mask image in which a part of the region of attention in the captured image C is set as a detection mask region.

In the present disclosure, "shielded " includes that at least a part of a target object region where a target object such as a face is present in an image loses a feature representing being the target object region to such an extent that being the target object region cannot be discriminated. Hereinafter, the partial region that has lost the feature representing being the target object region is referred to as a "shielded region". "Shielded" includes that at least a part of the target object region does not appear in the image. "Shielding " includes occlusion.

In the image, a case where at least a part of the target object region is covered with a shielding object and does not appear is also included in "shielded". The shielding occurs, for example, when a shielding object is present between the camera 3 and the face. For example, in FIG. 1, in the face image Fa, a portion of about the lower half of the face region is covered with a face mask, it can be said that the portion has lost a feature to an extent that being the face region cannot be discriminated, and it can be said that the portion is shielded. The face mask is an example of a "shielding object" of the present disclosure. The region in which the face mask appears in the face image Fa is an example of a "shielded region" of the present disclosure.

In addition, for example, in FIG. 1, in the face image Fb, the upper right portion of the face region toward the paper surface is covered with hair, it can be said that the portion has lost a feature to such an extent that being the face region cannot be discriminated, and it can be said that the portion is shielded. In the face image F, the hair is an example of a "shielding object" of the present disclosure. The region covered with hair in the face image Fb is an example of the "shielded region" of the present disclosure. The shielding object additionally includes a part of a body such as a hand, an arm, or another person's head, a beard, and an object such as sunglasses, a muffler, a veil, a collar of clothes, or a hat.

"Shielded" is not limited to a case where at least a part of the target object region is physically covered with the shielding object and does not appear. For example, as shown in the face image Fc in FIG. 1, even when a part of the face becomes a shadow and the feature of the face is lost, it can be said that the shadow portion is "shielded". In contrast to the case where a part of the target object region is dark as with a shadow, also when the light source appears in the image, the luminance is high in a part of the target object region due to light, and the feature representing being the target object region is lost to such an extent that being the target object region cannot be discriminated in the portion, it can be said that the portion is "shielded".

In the present disclosure, "the target object region where a target object is present in an image" includes a target object region in a case where the target object region is not shielded. "The target object region where a target object is present in an image" includes a region in which the target object is presumed to appear when the shielding is removed in a case where at least a part of the target object region is shielded. The face region R shown in FIG. 1 includes a region in which the face is presumed to appear when such shielding is removed.

With the above configuration, the face detection system 100 can detect the face region R even when a part of the face is shielded by the shielded region in the captured image C. For example, even when a part of the face is shielded by the shielded region in the captured image C, the face detection system 100 can determine that the face including the shielded region is the face.

For example, detection processing by the subsequent eye opening/closing detection system 50, face recognition system 60, or the like may be executed on the face region R detected by the face detection system 100. For example, the eye opening/closing detection system 50 image-analyzes the face region R, detects the positions of the eyes, the upper eyelid, the lower eyelid, and the like, and measures the number of times, the frequency, and the like of the opening/closing. For example, the face recognition system 60 image-analyzes the face region R, and recognizes (identifies) whether or not the face is a face of the same person as the face stored in the database.

### 2. Details

### 2-1. Face detection system

### 2-1-1. Configuration example of face detection system

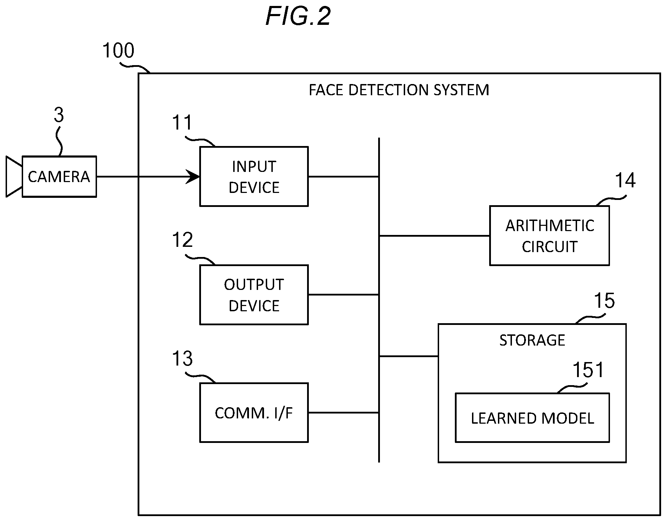

FIG. 2 is a block diagram showing an example of a hardware configuration of the face detection system 100 in FIG. 1. The face detection system 100 includes an input device 11, an output device 12, a communication interface (I/F) 13, an arithmetic circuit 14, and a storage 15. These components of the face detection system 100 does not need to be housed in one casing, and may be implemented by a plurality of computer systems.

The input device 11 is an interface circuit that connects the face detection system 100 and an external apparatus such as a camera 3 in order to input information to the face detection system 100. The output device 12 is an interface circuit that connects the face detection system 100 and an external apparatus in order to output information from the face detection system 100. The communication interface 13 includes an interface circuit for enabling communication connection between the face detection system 100 and an external apparatus. The communication interface 13 performs communication according to an existing wired communication standard or wireless communication standard.

The arithmetic circuit 14 includes a central processing unit (CPU), a random access memory (RAM), a read only memory (ROM), and the like, and controls the operation of the face detection system 100 according to information processing. Such information processing is implemented by the arithmetic circuit 14 executing a program. The arithmetic circuit 14 may be implemented by one or more dedicated processors. In addition, regarding the components of the arithmetic circuit 14, omission, substitution, and addition of functions may be appropriately performed according to the embodiment. The arithmetic circuit 14 may include various semiconductor integrated circuits such as a CPU, an MPU, a GPU, a microcomputer, a DSP, an FPGA, and an ASIC.

The storage 15 is a medium that accumulates information such as a program by electrical, magnetic, optical, mechanical, or chemical action so that a computer or another device, a machine, or the like can read the information such as the recorded program. The storage 15 is, for example, an auxiliary storage such as a hard disk drive or a solid state drive, and stores programs and the like to be executed in the learned model 151 and the arithmetic circuit 14. Although the learned model 151 is stored in the storage 15 in FIG. 2, the present disclosure is not limited thereto. For example, the learned model 151 does not need to be always stored in the storage 25, and only needs to be stored in the storage 25 when necessary for processing by the arithmetic circuit 14.

In the illustrated example, the camera 3 is connected to the input device 11 of the face detection system 100. The camera 3 is an example of an imaging device that forms data on an image in which a target object such as a person's face appears. For example, the arithmetic circuit 14 acquires an image in which a person's face appears from the camera 3 through the input device 11.

As described below, the learned model 151 is generated by causing the model to learn a relationship between non-mask information based on a portion excluding a mask region in a mask image in which the mask region covering a specific portion is set and a determination result indicating whether or not the mask image includes a face region. Here, the "non-mask information" indicates a feature amount calculated from a portion excluding the mask region. By using this learned model 151, the face detection system 100 can detect a face region in an image in which a partially shielded face appears.

### 2-1-2. Operation example of face detection system

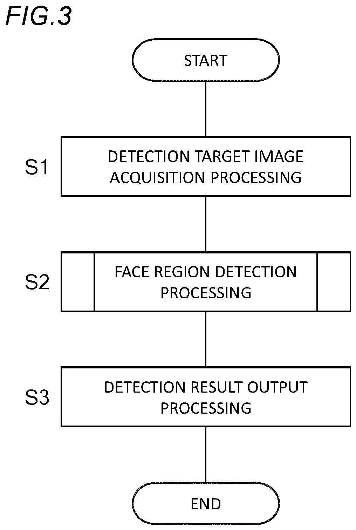

FIG. 3 is a flowchart showing an example of a detection method executed by the arithmetic circuit 14 of the face detection system 100 in FIG. 2. The processing procedure described below is merely an example, and the processing procedure and each piece of processing may be changed as much as possible.

### (Detection target image acquisition processing S1)

First, the arithmetic circuit 14 acquires a captured image as a detection target image to be a target of face region detection processing S2 described below (S1). For example, the arithmetic circuit 14 acquires a captured image captured by the camera 3 through the input device 11. Alternatively, the arithmetic circuit 14 may acquire a captured image stored in the storage 15, an external server, or the like.

### (Face region detection processing S2)

Next, the arithmetic circuit 14 inputs the captured image acquired in the detection target image acquisition processing S1 to the learned model 151, and causes the learned model 151 to detect a face region in which a person's face is present in the captured image (S2). The face region detection processing S2 includes inference processing in which the learned model 151 detects whether or not a face region is present in the captured image.

### (Detection result output processing S3)

The arithmetic circuit 14 may output the detection result of the face region detection processing S2 (S3) .

### (Region of attention setting processing S21)

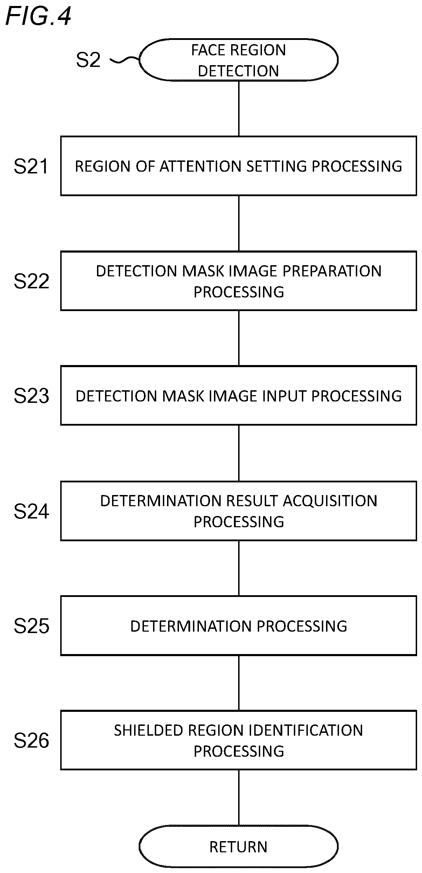

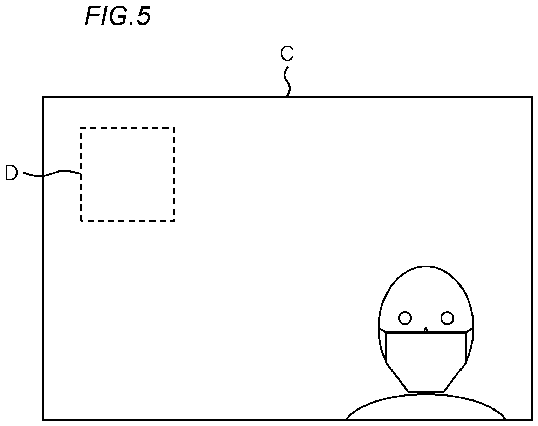

FIG. 4 is a flowchart showing an example of the face region detection processing S2 shown in FIG. 3. First, as shown in FIG. 5, the arithmetic circuit 14 sets a region of attention D to be a target of detection processing in the captured image C (S21). The region of attention D is sequentially selected by being shifted in the longitudinal direction or the lateral direction at a constant interval from the end of the captured image C. For example, the region of attention D is sequentially selected in the captured image C by a raster scan method. The processing shown in FIG. 4 is repeatedly executed according to the number of times of selection of the region of attention D. An example of processing of detecting a face using a raster scan method as described above is disclosed in, for example, Japanese Patent Application Laid-Open No. 2005-327242. In one example, the region of attention D may be the entire captured image C.

### (Detection mask image preparation processing S22)

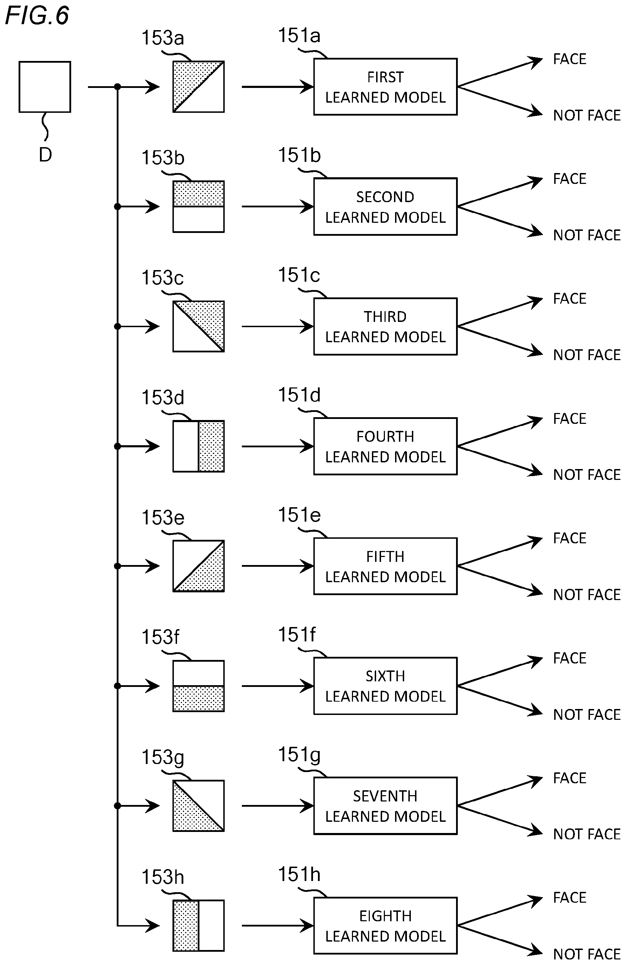

Next, the arithmetic circuit 14 prepares a mask image in which a part of the region of attention D is masked (S22). Hereinafter, the mask image to be detected is referred to as a "detection mask image". FIG. 6 is a schematic diagram for illustrating the processing S22 to S24 in FIG. 4. The detection mask images 153a to 153h prepared in the detection mask image preparation processing S22 are, for example, data in which portions different in the region of attention D are set as detection mask regions as shown in FIG. 6. The position of the detection mask region of each of the detection mask images 153a to 153h corresponds to the position of the mask region of the learning mask image to be learned by each model in the learning stage described below.

### (Detection mask image input processing S23)

Next, the arithmetic circuit 14 gives the detection mask image to the learned model 151 (S23) . In FIG. 6, an example in which the learned model 151 includes first to eighth learned models 151a to 151h respectively corresponding to the detection mask images 153a to 153h will be described. The learned models 151a to 151h respectively correspond to learned models to be generated by models 251a to 251h described below performing learning.

### (Determination result acquisition processing S24)

Next, the arithmetic circuit 14 obtains a determination result being output information from each of the learned models 151a to 151h (S24). For example, the learned model 151a determines whether or not a face appears in an non-mask region (a lower right portion toward the paper surface of FIG. 6) that is not masked in the detection mask image 153a, that is, whether or not it is a lower right portion of the face region. As described above, the learned model 151 determines whether or not the region of attention D includes a face region with the selected region of attention D as an input.

### (Determination processing S25)

Next, the arithmetic circuit 14 detects a face region in the captured image C based on the determination result acquired from each of the learned models 151a to 151h in the determination result acquisition processing S24 (S25). For example, when the learned model 151 determines that the region of attention D includes a face region, the arithmetic circuit 14 determines that a face region is present at the position of the region of attention D in the captured image C.

### (Shielded region identification processing S26)

Next, the arithmetic circuit 14 identifies the shielded region based on the determination result obtained from each of the learned models 151a to 151h in the determination result acquisition processing S24 (S26). For example, the arithmetic circuit 14 identifies which region in the face region is shielded such as the lower side, the upper side, the left side, and the right side, in the detected face region. It should be noted that identifying the shielded region includes identifying that the detected face region is not shielded at all.

For example, when the learned model 151a outputs the determination result that the lower right portion of the region of attention D is "the face region", and each of the other learned models 151b to 151h outputs the determination result that the non-mask region to be in charge is "not the face region", the arithmetic circuit 14 determines that a face region in which the lower right portion is shielded appears in the region of attention D. Therefore, the arithmetic circuit 14 can identify that the lower right portion of the region of attention D is the shielded region.

In addition, when each of all of the learned models 151a to 151h outputs the detection result that the non-mask region to be in charge is "the face region", it can be said that a face in which none of the mask regions of the detection mask images 153a to 153h are shielded appears in the region of attention D. For example, it can be said that a face in which nothing is shielded appears in the region of attention D. Furthermore, when each of all of the learned models 151a to 151h outputs the detection result that the non-mask region to be in charge is "not the face region", it can be determined that the face region is not included in the region of attention D.

As described above, in addition to detecting the face region in the determination result acquisition processing S24, the arithmetic circuit 14 can identify which region in the face region is shielded in the shielded region identification processing S26.

As described above, the face detection system 100 includes the storage 15 that stores the learned model 151 and the arithmetic circuit 14. The learned model 151 learns a relationship between non-mask information based on a portion excluding a mask region in a mask image in which the mask region covering a specific portion is set and a determination result indicating whether or not the mask image includes a face region. The arithmetic circuit 14 executes detection target image acquisition processing S1, region of attention setting processing S21, detection mask image preparation processing S22, determination result acquisition processing S24, and determination processing S25. The detection target image acquisition processing S1 is processing of acquiring a detection target image. The region of attention setting processing S21 is processing of setting a part or the whole of the detection target image as the region of attention D. The detection mask image preparation processing S22 is processing of preparing a detection mask image from the region of attention D. The determination result acquisition processing S24 is processing of inputting the detection mask image prepared in the detection mask image preparation processing S22 to the learned model (S23), and acquiring the determination result corresponding to the detection mask image prepared in the detection mask image preparation processing from the learned model (S24). The determination processing S25 is processing of determining whether or not the region of attention D includes a face region based on the determination result acquired in the determination result acquisition processing S24. The face detection system 100 thus configured can improve the accuracy of detection of a target object such as a partially shielded face.

In addition, for example, in order to detect a face of a person wearing a face mask, the conventional face detection system needs to learn a large amount of image data indicating a face of a person wearing a face mask. Furthermore, when learning is performed using an image of a face of a person wearing a white face mask, with respect to an image in which a person wearing, for example, a black face mask other than a white one appears, the conventional face detection system cannot detect the face of the person. On the other hand, in the face detection system 100 according to the present embodiment, the learned model 151 is learned to output a result indicating whether or not the region of attention indicates the face region with respect to the input of the detection mask images 153a to 153h in which a part of the region of attention in the captured image C is set as the detection mask region. Accordingly, with respect to a face partially shielded by a shielded region, the face detection system 100 can detect the face regardless of the shielding mode. For example, even when the shielding is performed by a shielding object such as a white face mask, a black face mask, or a muffler, the face detection system 100 can accurately detect the face shielded by the shielding object.

The storage 15 may store a plurality of learned models 151a to 151h corresponding to a plurality of respective detection mask regions different in specific portions. In this case, the detection mask image preparation processing S22 prepares a plurality of detection mask images 153a to 153h in which a plurality of respective detection mask regions are set from the region of attention D. The determination result acquisition processing S24 inputs the detection mask images 153a to 153h to the learned models 151a to 151h for each of the plurality of mask regions, and acquires a plurality of determination results corresponding to the plurality of respective mask regions. The determination processing S25 determines whether or not the region of attention D includes a face region based on the plurality of determination results.

In the example shown in FIG. 6, the first learned model 151a is learned so as to output a determination result indicating whether or not the region of attention D includes a face region with respect to the input of the detection mask image 153a. The second learned model 151b is learned so as to output a determination result indicating whether or not the region of attention D is a face region with respect to the input of the detection mask image 153b. The same applies to the third to eighth learned models 151c to 151h.

The face detection system 100 configured so that the learned model 151 includes the plurality of learned models 151a to 151h in this manner can accurately detect the face according to various shielding modes.

When the region of attention D includes a face region, the face detection system 100 may identify a shielded region in which a part of the face is shielded in the region of attention D based on a plurality of determination results (S26). Such identification result information as to which region of the face is shielded can be used, for example, for analysis of a social situation about a person present in a specific geographical region, comparison of such an analysis result for each geographical region, and the like.

As described above, the detection method executed by the face detection system 100 includes the detection target image acquisition processing S1, the region of attention setting processing S21, the detection mask image preparation processing S22, the determination result acquisition processing S24, and the determination processing S25. The detection target image acquisition processing S1 is processing of acquiring a detection target image. The region of attention setting processing S21 is processing of setting a part or the whole of the detection target image as the region of attention D. The detection mask image preparation processing S22 is processing of preparing a detection mask image from the region of attention D. The determination result acquisition processing S24 is processing of inputting the detection mask image prepared in the detection mask image preparation processing S22 to the learned model (S23), and acquiring the determination result corresponding to the detection mask image prepared in the detection mask image preparation processing from the learned model (S24). The determination processing S25 is processing of determining whether or not the region of attention D includes a face region based on the determination result acquired in the determination result acquisition processing S24. With this detection method, it is possible to improve the accuracy of detecting a target object such as a partially shielded face.

The detection method executed by the face detection system 100 can be implemented by the arithmetic circuit 14 executing a program. This program is a computer program for causing the arithmetic circuit 14 to execute the above detection method. According to this program, similarly to the face detection system 100, it is possible to improve the accuracy of detecting a target object such as a partially shielded face.

### 2-2. Learning system

### 2-2-1. Configuration example of learning system

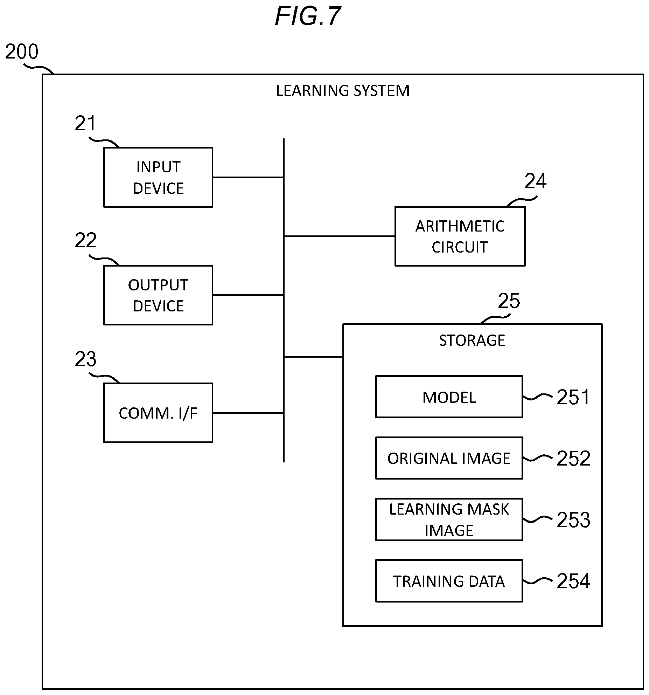

FIG. 7 is a block diagram showing an example of a learning system 200 for generating the learned model 151 shown in FIG. 2. The learning system 200 includes an input device 21, an output device 22, a communication interface (I/F) 23, an arithmetic circuit 24, and a storage 25. These components of the learning system 200 does not need to be housed in one casing, and may be implemented by a plurality of computer systems.

The input device 21 is an interface circuit that connects the learning system 200 and an external apparatus in order to input information to the learning system 200. The output device 22 is an interface circuit that connects the learning system 200 and an external apparatus in order to output information from the learning system 200. The communication interface 23 includes an interface circuit for enabling communication connection between the learning system 200 and an external apparatus. The communication interface 23 performs communication according to an existing wired communication standard or wireless communication standard.

The arithmetic circuit 24 includes a central processing unit (CPU), a random access memory (RAM), a read only memory (ROM), and the like, and controls the operation of the learning system 200 according to information processing. Such information processing is implemented by the arithmetic circuit 24 executing a program. The arithmetic circuit 24 may be implemented by one or more dedicated processors. In addition, regarding the components of the arithmetic circuit 24, omission, substitution, and addition of functions may be appropriately performed according to the embodiment. The arithmetic circuit 24 may include various semiconductor integrated circuits such as a CPU, an MPU, a GPU, a microcomputer, a DSP, an FPGA, and an ASIC.

The storage 25 is a medium that accumulates information such as a program by electrical, magnetic, optical, mechanical, or chemical action so that a computer or another device, a machine, or the like can read the information such as the recorded program. The storage 25 is, for example, an auxiliary storage such as a hard disk drive or a solid state drive, and stores a model 251, an original image 252, a learning mask image 253, training data 254, a program executed by the arithmetic circuit 24, and the like. Details of the model 251, the original image 252, the learning mask image 253, and the training data 254 will be described below. Although these pieces of data are stored in the storage 25 in FIG. 7, the present disclosure is not limited thereto. For example, these pieces of data do not need to be always stored in the storage 25, and only need to be stored in the storage 25 when necessary for processing by the arithmetic circuit 24.

### 2-2-2. Operation example of learning system

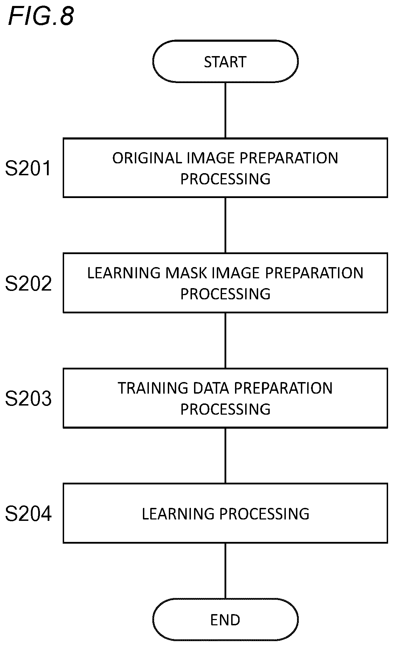

Next, as a learning method, a method for generating the learned model 151 will be described. FIG. 8 is a flowchart showing an example of a learning method. The learning method is executed by the learning system 200 shown in FIG. 7, for example. For example, the arithmetic circuit 24 of the learning system 200 causes the model 251 to learn to generate the learned model 151. The processing procedure described below is merely an example, and the processing procedure and each piece of processing may be changed as much as possible.

### (Original image preparation processing S201)

First, the arithmetic circuit 24 prepares an original image 252 (S201). For example, the arithmetic circuit 24 acquires the original image 252 stored in the storage 25. The arithmetic circuit 24 may acquire a captured image as the original image 252 from an external apparatus such as a camera through the input device 21.

### (Learning mask image preparation processing S202)

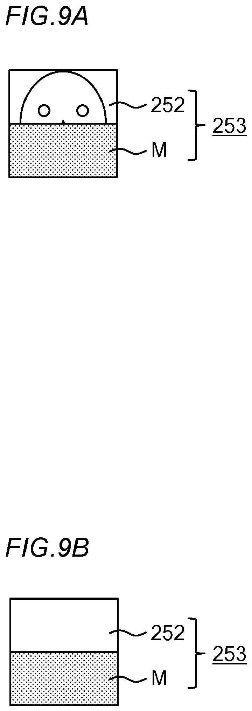

Next, the arithmetic circuit 24 prepares a mask image for learning (hereinafter, referred to as a "learning mask image") 253 (S202). FIG. 9A is a schematic diagram showing an example of the learning mask image 253. The learning mask image 253 is obtained by setting a part of the original image 252 as the mask region M. In the example shown in FIG. 9A, the lower half of the original image 252 is set as the mask region M. As described above, the mask region M may be one region spreading from the lower end, which is one of the outer edges, of the original image 252 toward the center of the original image 252, that is, upward. In addition, the mask region M may be one region spreading from at least the entire one side of the rectangle representing the original image 252 toward the center of the face region. In the example shown in FIG. 9A, the mask region M is one region spreading upward from the entire lower side of the rectangle representing the original image 252.

As in the example shown in FIG. 9A, the mask region M may occupy about 50% of the original image 252. However, the present disclosure is not limited thereto, and the mask region M may occupy a ratio selected from a range of 20% to 70% of the original image 252. In addition, in the example shown in FIG. 9A, the mask region M is a rectangular region, but is not limited thereto, and may be a region having a shape such as a circle, an ellipse, or a polygon, for example.

Obtaining the learning mask image 253 in FIG. 9A from the original image 252 may be implemented by the arithmetic circuit 24 itself executing a program. In this case, the arithmetic circuit 24 stores the generated learning mask image 253 in the storage 25, for example. Alternatively, the learning mask image 253 may be created outside the learning system 200. For example, obtaining the learning mask image 253 in FIG. 9A from the original image 252 may be executed by an external processor or the like, and thereafter, the learning mask image 253 may be stored in the storage 25 through the input device 21, the communication interface 23, and the like.

FIG. 9A shows an example in which the original image 252 is a face image indicating a face region in the learning mask image 253, but this is merely an example. As illustrated in FIG. 9B, the original image 252 includes an image in which a face does not appear.

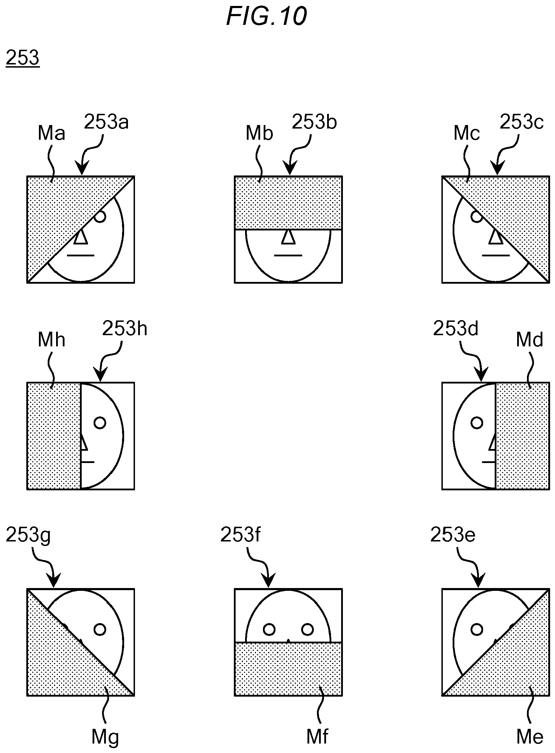

FIG. 10 is a schematic diagram showing an example of a plurality of learning mask images 253a to 253h in which a plurality of mask regions Ma to Mh different in specific portions are respectively set. The learning mask image 253 shown in FIG. 7 may be an image data group including learning mask images 253a to 253h in which 8 different regions are each set as mask regions.

The specific portion of the mask region Ma is the upper left half. Therefore, in the learning mask image 253a, the upper left half of the original image is set as the mask region Ma. The specific portion of the mask region Mb is the upper half. Therefore, in the learning mask image 253b, the upper half of the original image is set as the mask region Mb. The specific portion of the mask region Mc is the upper right half. Therefore, in the learning mask image 253c, the upper right half of the original image is set as the mask region Mc. The specific portion of the mask region Md is the right half. Therefore, in the learning mask image 253d, the right half of the original image is set as the mask region Md. The specific portion of the mask region Me is the lower right half. Therefore, in the learning mask image 253e, the lower right half of the original image is set as the mask region Me. The specific portion of the mask region Mf is the lower half. Therefore, in the learning mask image 253f, the lower half of the original image is set as the mask region Mf, as in the learning mask image 253 in FIG. 9A. The specific portion of the mask region Mg is the lower left half. Therefore, in the learning mask image 253g, the lower left half of the original image is set as the mask region Mg. The specific portion of the mask region Mh is the left half. Therefore, in the learning mask image 253h, the left half of the original image is set as the mask region Mh.

As described above, the learning mask images 253a to 253h have mask regions at positions different from each other of the original image. That is, the learning mask image preparation processing S202 includes preparing a plurality of learning mask images 253a to 253h in which respective portions different from each other in the original image 252 are set as mask regions Ma to Mh. As described above, each of the mask regions Ma to Mh may be a continuous region spreading from an outer edge of the original image toward the center of the original image. As in the example shown in FIG. 10, each of the mask regions Ma to Mh may occupy about 50% of the original image. However, the present disclosure is not limited thereto, and each of the mask regions Ma to Mh may occupy a ratio selected from a range of 20% to 70% of the original image.

. By using the learned model 151 that has learned the plurality of learning mask images 253a to 253h having the mask regions at various positions as described above, the face detection system 100 can accurately detect the face according to more various shielding modes.

### (Training data preparation processing S203)

Next, the arithmetic circuit 24 prepares training data 254 each of which includes the learning mask image 253 as the input information and the determination result indicating whether or not the learning mask image 253 includes a face region as the ground truth information (S203).

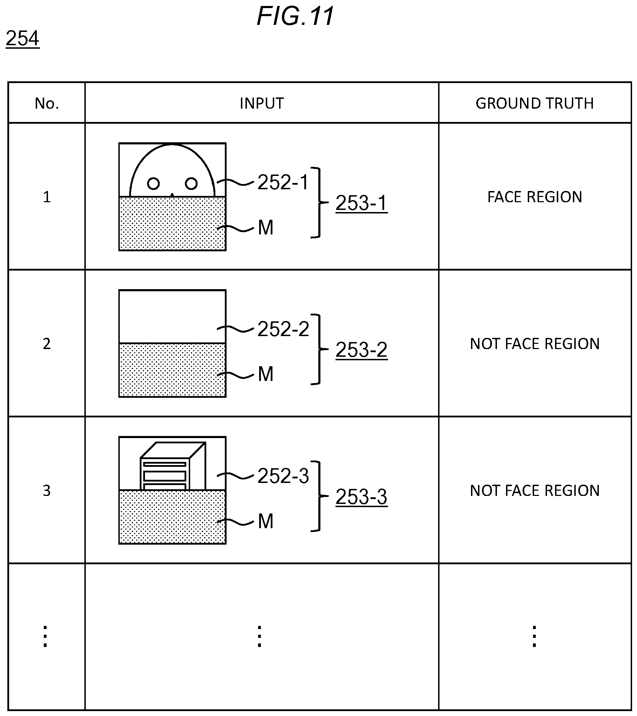

FIG. 11 is a schematic diagram illustrating training data 254 to be prepared in the training data preparation processing S203. A first row of the table in FIG. 11 shows a learning mask image 253-1 which is input data. In the learning mask image 253-1, the original image 252-1 indicates a face region. Therefore, for the learning mask image 253-1, the determination result of "being the face region" is set as the ground truth information. In addition, in the second row and the third row in FIG. 11, neither the original image 252-2 of the learning mask image 253-2 nor the original image 252-3 of the learning mask image 253-3 indicates a face region. Therefore, for the learning mask image 253-2 and the learning mask image 253-3, the determination result of "not being the face region" is set as the ground truth information.

### (Learning processing S204)

Returning to FIG. 8, after the training data preparation processing S203, the arithmetic circuit 24 executes machine learning on the model 251 using the training data 254 (S204). The learning processing S204 includes causing the model 251 to learn the relationship between the non-mask information based on the portion excluding the mask region M in the learning mask image 253 and the ground truth information and generating the learned model 151 (see FIG. 2) .

The model 251 is, for example, a learning model such as a decision tree model or a support vector machine that performs machine learning by a method of a decision tree including a classification tree. The learning may be performed by a boosting learning algorithm such as AdaBoost.

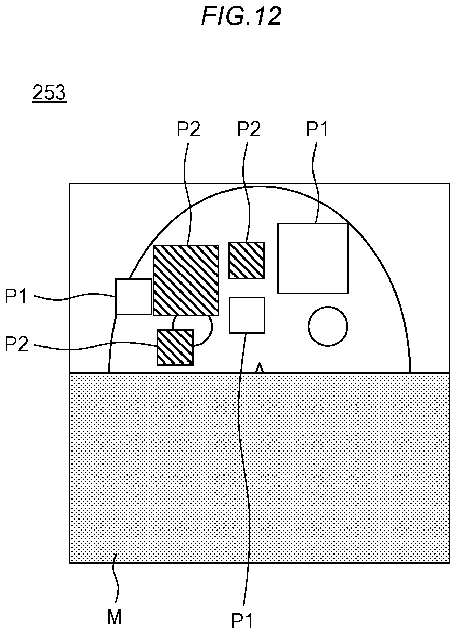

In the example shown in FIG. 11, the arithmetic circuit 24 causes the model 251 to learn the relationship between the feature amount of the image in the upper half portion excluding the mask region M in the learning mask image 253 and the ground truth information. Here, as shown in FIG. 12, the learning of the feature amount of the image includes learning a difference or a ratio between the feature amount in the first feature region P1 in a portion excluding the mask region M in the learning mask image 253 and the feature amount in a second feature region P2 different from the first feature region P1. The feature amount in the feature region indicates, for example, an average value of pixel values in the feature region. The difference in the feature amount is, for example, a difference in luminance of pixels. For example, as this feature amount, a Haar-Like feature amount, a local binary pattern (LBP) feature amount, a histogram of oriented gradients (HOG) feature amount, a sparse feature amount (C. Huang, H. Ai, Y. Li, S. Lao, "Learning Sparse Features in Granular Space for Multi-View Face Detection", International Conference on Automatic Face and Gesture Recognition, pp. 401-406, 2006), or the like may be used, and the model 251 may constitute a cascade classifier by learning. As described above, a technique for detecting a face of a person by calculating a difference in feature amounts between feature regions is disclosed in Reference Document 1 (Paul Viola, Michael Jones, "Robust Real-time Object Detection", SECOND INTERNATIONAL WORKSHOP ON STATISTICAL AND COMPUTATIONAL THEORIES OF VISION-MODELING, LEARNING, COMPUTING, AND SAMPLING VANCOUVER CANADA, JULY 13, 2001), Japanese Patent Application Laid-Open No. 2005-327242, and the like.

In addition, the model 251 may be a learning model having a structure of a neural network, for example, a convolutional neural network (CNN). The supervised learning of a model such as CNN is performed by the arithmetic circuit 24 using, for example, back propagation.

In the example in which a plurality of learning mask images 253a to 253h are used as shown in FIG. 10, the learning processing S204 may include causing different models to learn the relationship between the information in the portion excluding the respective mask regions Ma to Mh of the plurality of learning mask images 253a to 253h and the ground truth information, and generating a plurality of learned models 151a to 151h (see FIG. 6).

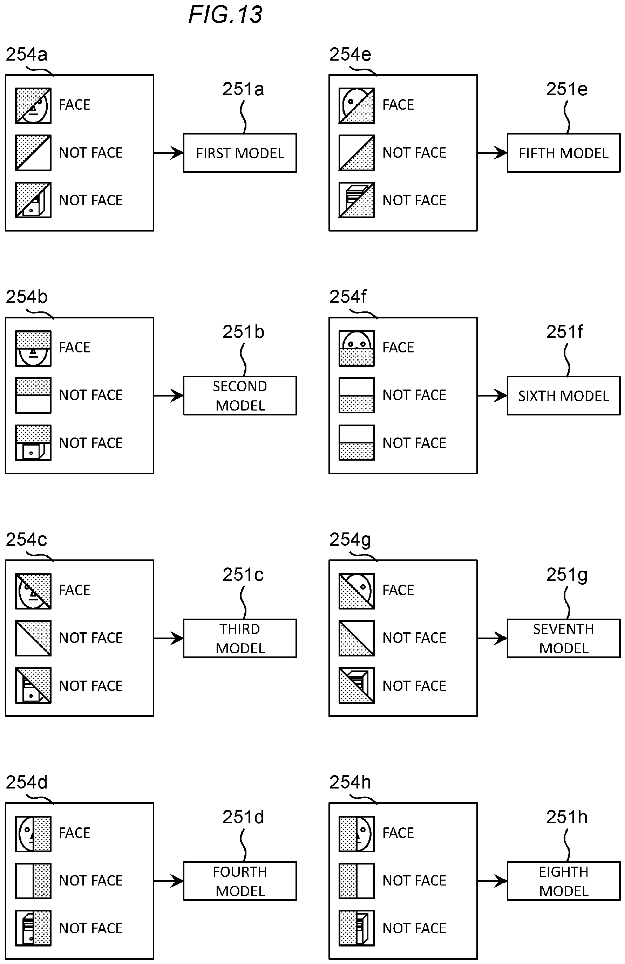

FIG. 13 is a schematic diagram for illustrating machine learning for a plurality of models. FIG. 13 illustrates 8 models 251a to 251h.

For example, the first model 251a performs machine learning using, as an input, a mask image in which the upper left half of the original image is set as a mask region, and using training data 254a in which a result indicating whether or not the original image is a face region is set as ground truth information. The second model 251b performs machine learning using, as an input, a mask image in which the upper half of the original image is set as a mask region, and using training data 254b in which a result indicating whether or not the original image is a face region is set as ground truth information. The third model 251c performs machine learning using, as an input, a mask image in which the upper right half of the original image is set as a mask region, and using training data 254c in which a result indicating whether or not the original image is a face region is set as ground truth information. The fourth model 251d performs machine learning using, as an input, a mask image in which the right half of the original image is set as a mask region, and using training data 254d in which a result indicating whether or not the original image is a face region is set as ground truth information. The fifth model 251e performs machine learning using, as an input, a mask image in which the lower right half of the original image is set as a mask region, and using training data 254e in which a result indicating whether or not the original image is a face region is set as ground truth information. The sixth model 251f performs machine learning using, as an input, a mask image in which the lower half of the original image is set as a mask region, and using training data 254f in which a result indicating whether or not the original image is a face region is set as ground truth information. The seventh model 251g performs machine learning using, as an input, a mask image in which the lower left half of the original image is set as a mask region, and using training data 254g in which a result indicating whether or not the original image is a face region is set as ground truth information. The eighth model 251h performs machine learning using, as an input, a mask image in which the left half of the original image is set as a mask region, and using training data 254h in which a result indicating whether or not the original image is a face region is set as ground truth information.

As described above, a plurality of learned models 251a to 251h are obtained by causing the plurality of models 151a to 151h in charge of the mask regions at the respective positions to learn the mask images in which the different regions are set as the mask regions. The face detection system 100 configured so that the learned model 151 includes the plurality of learned models 151a to 151h in this manner can accurately detect the face according to various shielding modes.

As described above, the learning method includes original image preparation processing S201, learning mask image preparation processing S202, training data preparation processing S203, and learning processing S204. The original image preparation processing S201 prepares an original image. The learning mask image preparation processing S202 prepares the learning mask image 253 in which the mask region M covering the specific portion is set from the original image. The training data preparation processing S203 prepares training data 254 each of which includes the learning mask image 253 as the input information and the determination result indicating whether or not the learning mask image 253 includes a face region as the ground truth information. The learning processing S204 executes machine learning on the model 251 using the training data 254. The learning processing S204 includes causing the model 251 to learn the relationship between the non-mask information based on the portion excluding the mask region M in the learning mask image 253 and the determination result included in the training data 254 and generating the learned model 151.

With this learning method, it is possible to obtain the learned model 151 capable of improving the accuracy of detecting a target object such as a partially shielded face.

Furthermore, the face detection system 100 using the learned model 151 obtained in this manner can detect which region of the face is shielded, in addition to the above effects. For example, the face detection system 100 using the learned model 151 can make a following determination on a certain image by including, for example, a conventional face detector capable of detecting an unshielded face. That is, when both the detection result by the learned model 151 and the detection result by the conventional face detector are the results of "being a face", the face detection system 100 determines that an unshielded face appears in the image. In addition, when the detection result by the learned model 151 is a result of "being a face" while the detection result by the conventional face detector is a result of "being not a face", the face detection system 100 determines that a face in which a position corresponding to the mask region M is shielded appears in the image. Such detection result information as to which region of the face is shielded can be used, for example, for analysis of a social situation about a person present in a specific geographical region, comparison of such an analysis result for each geographical region, and the like.

The learning mask image preparation processing S202 may include preparing, from original image, a plurality of learning mask images 253a to 253h in which a plurality of learning mask regions Ma to Mh different in specific portions are respectively set. Since the learning method includes this learning processing S204, the learned model 151 can accurately detect the face according to more various shielding modes.

The learning processing S204 may include causing the models 251a to 251h to learn the relationship between the non-mask information and the determination result for each of the plurality of mask regions Ma to Mh and generating a plurality of learned models 151a to 151h respectively corresponding to the plurality of mask regions Ma to Mh. By the plurality of learned models 151a to 151h, the face can be accurately detected according to more various shielding modes. Furthermore, the face detection system 100 using the plurality of learned models 151a to 151h can detect the position of the shielded region in the region of attention D based on the result acquired from each of the plurality of learned models 151a to 151h.

In addition, as described above, an embodiment of the present disclosure provides a training data generation method including: original image preparation processing S201 of preparing an original image; learning mask image preparation processing S202 of preparing, from the original image, a learning mask image 253 in which a mask region M covering a specific portion is set; and training data preparation processing S203 of generating training data each including the learning mask image 253 as input information and a determination result indicating whether or not the learning mask image 253 includes a face region as ground truth information. The original image preparation processing S201 is an example of "first processing" of the training data generation method. The learning mask image preparation processing S202 is an example of "second processing" of the training data generation method. The training data preparation processing S203 is an example of "third processing" of the training data generation method. By this training data generation method, it is possible to generate a learned model capable of improving the accuracy of detecting a target object such as a partially shielded face.

### (Modification)

Although the embodiment of the present disclosure has been described in detail above, the above description is merely an example of the present disclosure in all respects. Various improvements and modifications can be made without departing from the scope of the present disclosure. For example, the following modifications are possible. It should be noted that in the following description, the same reference numerals will be used for the same components as those of the above embodiment, and the description of the same points as those of the above embodiment will be omitted as appropriate. The following modifications can be appropriately combined.

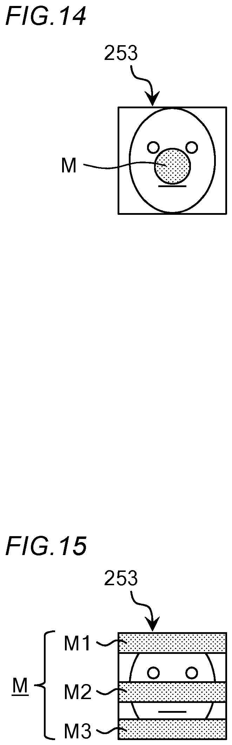

In the above embodiment, as illustrated in FIGS. 9A, 9B, and 10, an example in which the mask regions M, and Ma to Mh of the learning mask image 253 are one region spreading from the outer edge of the face region has been described. However, the shape of the mask region is not limited to this example. For example, as shown in FIG. 14, the mask region M may be one continuous region occupying a part of the face region rather than the region spreading from the outer edge of the face region. In addition, for example, as shown in FIG. 15, the mask region M may include a plurality of regions M1, M2, and M3 that occupy different portions of the face region. By using the learned model 151 that has learned the learning mask image 253 as described above, the face detection system 100 can accurately detect the target object according to more various shielding modes.

In addition, each of the face detection system 100 and the learning system 200 is not essential to be implemented in a different computer system. The face detection system 100 and the learning system 200 may be implemented in a single computer system.

### REFERENCE SIGNS LIST

- 1: image analysis system
- 3: camera
- 11: input device
- 12: output device
- 13: communication interface
- 14: arithmetic circuit
- 15: storage
- 21: input device
- 22: output device
- 23: communication interface
- 24: arithmetic circuit
- 25: storage
- 50: eye opening/closing detection system
- 60: face recognition system
- 100: face detection system
- 151: learned model
- 153: detection mask image
- 200: learning system
- 251: model
- 252: original image
- 253: learning mask image
- 254: training data
- C: captured image
- D: region of attention
- M: mask region
- R: face region

## Claims

1. A learning method comprising:
original image preparation processing of preparing an original image;
learning mask image preparation processing of preparing a mask image in which a mask region covering a specific portion is set from the original image;
training data preparation processing of preparing pieces of training data including the mask image as input information and a determination result indicating whether or not the mask image includes a target object region in which a target object is present as ground truth information; and
learning processing of executing machine learning on a model using the training data,
wherein the learning processing includes causing the model to learn a relationship between non-mask information based on a portion excluding the mask region in the mask image and the determination result, and generating a learned model.

2. The learning method according to claim 1, wherein the learning mask image preparation processing includes preparing, from the original image, a plurality of mask images in which a plurality of the respective mask regions different in the specific portion are set.

3. The learning method according to claim 2, wherein the learning processing includes causing the model to learn a relationship between the non-mask information and the determination result for each of the plurality of mask regions and generating a plurality of the learned models corresponding to the plurality of respective mask regions.

4. A learned model that is learned about a relationship between non-mask information based on a portion excluding a mask region in a mask image in which the mask region covering a specific portion is set and a determination result indicating whether or not the mask image includes a target object region in which a target object is present.

5. A training data generation method comprising:
first processing of preparing an original image;
second processing of preparing a mask image in which a mask region covering a specific portion is set from the original image; and
third processing of generating pieces of training data including the mask image as input information and a determination result indicating whether or not the mask image includes a target object region in which a target object is present as ground truth information.

6. A detection system comprising:
a storage configured to store a learned model; and
an arithmetic circuit,
wherein the learned model learns a relationship between non-mask information based on a portion excluding a mask region in a mask image in which the mask region covering a specific portion is set and a determination result indicating whether or not the mask image includes a target object region in which a target object is present, and
the arithmetic circuit executes:
detection target image acquisition processing of acquiring a detection target image;
region of attention setting processing of setting a part or a whole of the detection target image as a region of attention;
detection mask image preparation processing of preparing the mask image from the region of attention;
determination result acquisition processing of inputting the mask image prepared in the detection mask image preparation processing to the learned model and acquiring the determination result corresponding to the mask image prepared in the detection mask image preparation processing from the learned model; and
determination processing of determining whether or not the region of attention includes the target object region based on the determination result acquired in the determination result acquisition processing.,

7. The detection system according to claim 6, wherein
the storage stores a plurality of the learned models corresponding to a plurality of the respective mask regions different in the specific portion,
the detection mask image preparation processing prepares a plurality of the mask images in which the plurality of respective mask regions is set from the region of attention,
the determination result acquisition processing inputs the mask image to the learned model for each of the plurality of mask regions and acquires a plurality of the determination results corresponding to the plurality of respective mask regions, and
the determination processing determines whether or not the region of attention includes the target object region based on the plurality of determination results.

8. The detection system according to claim 7, wherein when the region of attention includes the target object region, the determination processing identifies a shielded region in which a part of the target object is shielded in the region of attention based on the plurality of determination results.

9. A detection method executed by an arithmetic circuit using a learned model, wherein
the learned model learns a relationship between non-mask information based on a portion excluding a mask region in a mask image in which the mask region covering a specific portion is set and a determination result indicating whether or not the mask image includes a target object region in which a target object is present,
the detection method comprising:
detection target image acquisition processing of acquiring a detection target image;
region of attention setting processing of setting a part or a whole of the detection target image as a region of attention;
detection mask image preparation processing of preparing the mask image from the region of attention;
determination result acquisition processing of inputting the mask image prepared in the detection mask image preparation processing to the learned model and acquiring the determination result corresponding to the mask image prepared in the detection mask image preparation processing from the learned model; and
determination processing of determining whether or not the region of attention includes the target object region based on the determination result acquired in the determination result acquisition processing.

10. A program for causing an arithmetic circuit to execute the detection method according to claim 9.
